# EUROPEAN PATENT APPLICATION

(11) **EP 4 439 500 A1**
(43) Date of publication of application: **02.10.2024**
(21) Application number: 24160796.9
(22) Date of filing: 01.03.2024
(51) Int. Cl.: G07C 9/00, B60R 25/24, G10L 15/00

(54) **SYSTEM AND METHOD FOR ACTIVATING REMOTE CONTROL VEHICLE SYSTEM FUNCTIONS USING VOICE COMMANDS**

(30) Priority: 01.03.2023 US 202363449295 P
(71) Applicant: Harman International Industries, Inc., Stamford, Connecticut 06901 (US)
(72) Inventor: DU, Yu, Stamford, CT, 06901 (US); JHALA, Mitul Hemendra, Stamford, CT, 06901 (US); KRAJEWSKI, Darin, Stamford, CT, 06901 (US)
(74) Representative: Westphal, Mussgnug & Partner, Patentanwälte mbB

(57) **Abstract**

A system and method for sound-activated remote control of vehicle functions for a vehicle having a remote-control system, the remote-control system has a key fob and at least one vehicle control module. A sound sensor module of a stand-alone smart sound sensor detects a sound event, correlates the sound event with a code, and transmits the code to the remote-control system to activate a function on the vehicle that is associated with the code.

## Description

### CROSS-REFERENCE TO RELATED APPLICATIONS

This application claims the benefit of U.S. Provisional Application Serial No. 63/449295, SYSTEM AND METHOD FOR ACTIVATING REMOTE CONTROL VEHICLE SYSTEM FUNCTIONS USING VOICE COMMANDS, filed March 1, 2023, the disclosure of which is incorporated in its entirety by reference.

### TECHNICAL FIELD

The present disclosure relates to remote control systems for vehicles and more particularly to voice activated command of remote-control systems for vehicles.

### BACKGROUND

Vehicles may be equipped with features that can be activated using a remote-control key fob. For example, power door locks, power windows, trunk release, and engine ignition. With developing technology in voice recognition, it has become desirable to use voice command to activate such features. This feature could be accomplished using a microphone installed at proper locations on a vehicle, preferably the exterior, to accept voice commands from a user, also preferably positioned outside of the vehicle. The voice commands need to be accepted, identified, and processed by the cloud (if the command is uploaded) or in an electronic control unit (ECU) on the vehicle.

There are drawbacks associated with this approach. One drawback is that the acoustic environment around a vehicle exterior can be complex. Noises from sources such as wind, engine, nearby traffic, and pedestrians in the vicinity of the vehicle could affect the accuracy of voice recognition. Another drawback is that the amount of electrical current and power needed by the cloud or an ECU that processes and recognizes voice commands picked up by the microphone cannot be ignored. Thus, to save battery power the system is only operational when the vehicle is started. In such a case, the voice activated remote-control system may not always be listening. Therefore, functions when the vehicle is parked, such as certain voice activated functions (e.g., open/close door/trunk), are not available when they are needed the most. Additionally, the cost associated with additional hardware and software, or modifications to existing hardware and software, needed to implement voice processing and recognition algorithms could be significant. Also, the cost and complexity of wired and wireless connections to enable signal communications among multiple modules inside and outside of the vehicle, and any necessary design modifications to an existing infotainment system could be significant, making it cost prohibitive for a vehicle maker to provide such a feature.

There is a need for a low-power consuming voice sensing and computing technology capable of performing voice command recognition locally in a smart sound sensor.

### SUMMARY

A system and method for sound-activated remote control of vehicle functions for a vehicle having a remote-control system. The remote-control system has a key fob and at least one vehicle control module to carry out the method for voice-activated remote control of vehicle. A smart sound sensor module detects a sound event and correlates the sound event with a code. The code is transmitted to the vehicle control module where it is recognized by vehicle control module to activate and carry out a function on the vehicle.

In one or more embodiments, the smart sound sensor module has a sound port and a sound sensing element. In one or more embodiments, the smart sound sensor module is on the vehicle. In one or more embodiments, the smart sound sensor module is on the key fob.

In one or more embodiments, the smart sound sensor detects sound-induced vibration and correlates the sound-induced vibration with a code recognized by the vehicle control module.

In one or more embodiments, the sound events are stored in a set of sound events, which is updatable. In one or more embodiments, the set of sound events is updatable by collecting, in real time, sound event samples to train an algorithm for customizing the smart sound sensor module.

### DESCRIPTION OF DRAWINGS

FIG. 1. is a block diagram of one or more embodiments of a voice activated remote control system for a vehicle;
FIG. 2A is a block diagram of one or more embodiments of a smart sound sensor module;
FIG. 2B is a block diagram of one or more embodiments of a smart sound sensor module;
FIG. 3 is a signal flow diagram of one or more embodiments of a smart sound sensor; module;
FIG. 4 is a block diagram of one or more embodiments of a method for activating remote control vehicle system functions using voice commands;
FIG. 5 is a flow diagram of one or more embodiments of a smart sound sensor module for remote control of vehicle systems;
FIG. 6 is a block diagram of a system having a smart sound sensor module capable of updates in real time; and
FIG. 7 is a flow diagram of one or more embodiments of a method for generating/training an algorithm for a smart sound senor module.

Elements and steps in the figures are illustrated for simplicity and clarity and have not necessarily been rendered according to any sequence. For example, steps that may be performed concurrently or in different order are illustrated in the figures to help to improve understanding of embodiments of the present disclosure.

### DETAILED DESCRIPTION

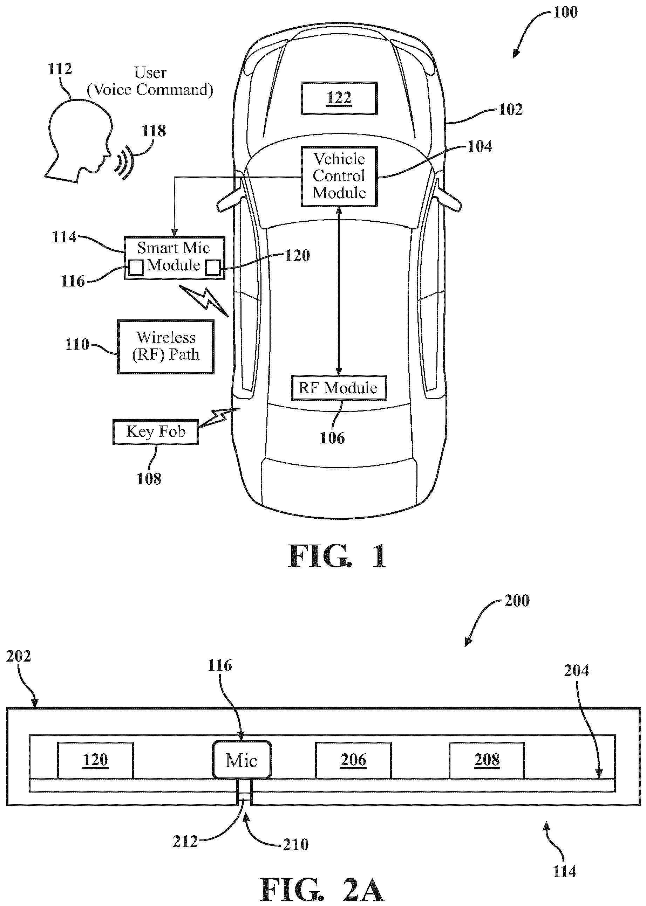

While various aspects of the present disclosure are described with reference to FIGS. 1-7, the present disclosure is not limited to such embodiments, and additional modifications, applications, and embodiments may be implemented without departing from the present disclosure. In the figures, like reference numbers will be used to illustrate the same components. Those skilled in the art will recognize that the various components set forth herein may be altered without varying from the scope of the present disclosure.

FIG. 1. is a block diagram of one or more embodiments of a voice activated remote control system 100 for a vehicle 102. Existing remote-control systems communicate with at least one vehicle control module, hereinafter the vehicle control module, 104 that communicatively couple to an RF module 106 on the vehicle 102. A key fob 108 has a wireless interface that communicates, typically across an RF path 110, with the RF module 106 on the vehicle.

A user 112 initiates a desired action at the key fob 108, typically by pressing a key or a sequence of keys (not shown in FIG. 1) on the key fob 108. The desired action is communicated from the key fob 108 across the RF path 110 to the RF module 106. If the RF module 106 detects that the corresponding key fob 108 is within a predetermined proximity of the vehicle 102, the RF module 106 then communicates the desired action to the vehicle control module 104 where it is carried out by one or more vehicle systems, such as unlocking the door, opening the trunk, or closing the trunk, opening, or closing one or more windows, starting the ignition, etc.

For voice activated remote control, a smart sound sensor module 114 is included in the system 100. The smart sound sensor module 114 has a sound sensing element 116 to receive a sound event 118, such as a voice command initiated by the user 112, and a processor 120 that recognizes and correlates the sound event 118 with the desired action that would otherwise be communicated by pressing one or more keys at the key fob 108. As discussed above, the sound event may include a voice command. Additionally, non-voice sound events may also be recognized and correlated. For example, for acoustic surveillance purposes, a sound event (to be described later herein) may also be a sound such as emergency vehicle sirens, breaking glass, knocking, or impact noise.

The sound event 118 detected by the sound sensing element 116 and locally processed by the processor 120 of the smart sound sensor module 114 determines the desired action and the desired action is communicated in a manner, such as an analog or digital handshake signal or code, hereinafter referred to generally as a code, across the RF path 110 to the RF module 106 on the vehicle 102, where it follows the same steps as if it were being communicated from the key fob 108. To follow typical vehicle security requirements, the RF module 106 may communicate the desired action to the vehicle control module 104, where it is carried out by one or more vehicle systems, only if the RF module 106 detects that the corresponding key fob 108 is within a predetermined proximity of the vehicle 102.

In one or more embodiments, the smart sound sensor module 114 may be installed inside or on the vehicle 102 and may be powered by a power supply 122 on the vehicle 102. However, it is possible to integrate the smart sound sensor module 114 together with the key fob 108, forming a voice activated key fob 108 that is outside of, and standalone from, the vehicle 102. In this arrangement, the smart sound sensor module 114 would be powered by a battery (not shown) in the key fob 108.

FIG. 2A is a block diagram 200 of one or more embodiments of the smart sound sensor module 114. The smart sound sensor module 114 has a housing 202 that contains a printed circuit board (PCB) 204 with the sound sensing element 116, the processor 120, an RF transmitter 206, and an antenna 208. The housing 202 has a sound port 210. The sound sensing element 116 may be a microphone suitable for mounting on the PCB 204, for example, a microelectromechanical systems (MEMS) microphone, or an electret capsule microphone (ECM). External sound waves (not shown), propagating in the air, reach a diaphragm (not shown) of the sound sensing element 116 through a sound port 210 in the housing 202 and the PCB 204. The processor 120 may be a dedicated voice processor that processes the sound.

When the user speaks a voice command to initiate a desired action, the sound sensing element 116 picks up the sound and the processor 120 performs voice recognition to correlate the voice command with the desired action. The processor 120 may be in the form of, but is not limited to, an audio digital signal processor (DSP), an edge artificial intelligence/machine learning (AI/ML) processor/chip, or any other general purpose digital signal processor capable of performing the function of voice and sound event recognition.

The RF transmitter 206 may be the same as, or similar to, the RF transmitter that is on the key fob, to communicate the desired action across the RF path (not shown in FIG. 2A). The antenna 208 is the interface that communicates the desired action from the RF transmitter 206 to the RF module on the vehicle (not shown in FIG. 2A).

For one or more embodiments where the smart sound sensor module 114 is installed in the car, the smart sound sensor module 114 draws power from a battery (not shown in FIG. 2A) on the vehicle. The smart sound sensor module 114 may be installed on, or close to, an outer surface of the vehicle. For example, the smart sound sensor module 114 may be installed on a door panel, a roof panel, a front bumper, or a rear bumper.

For one or more embodiments where the sound sensing element 116 is a microphone element and where the smart sound sensor module 114 might be exposed to an external environment of the vehicle, the sound sensing element 116 may be protected by an acoustically transparent mesh or membrane 212 to protect the sound sensing element 116 from being damaged by foreign object contamination such as dirt, rain, snow, or water from a car wash, for example.

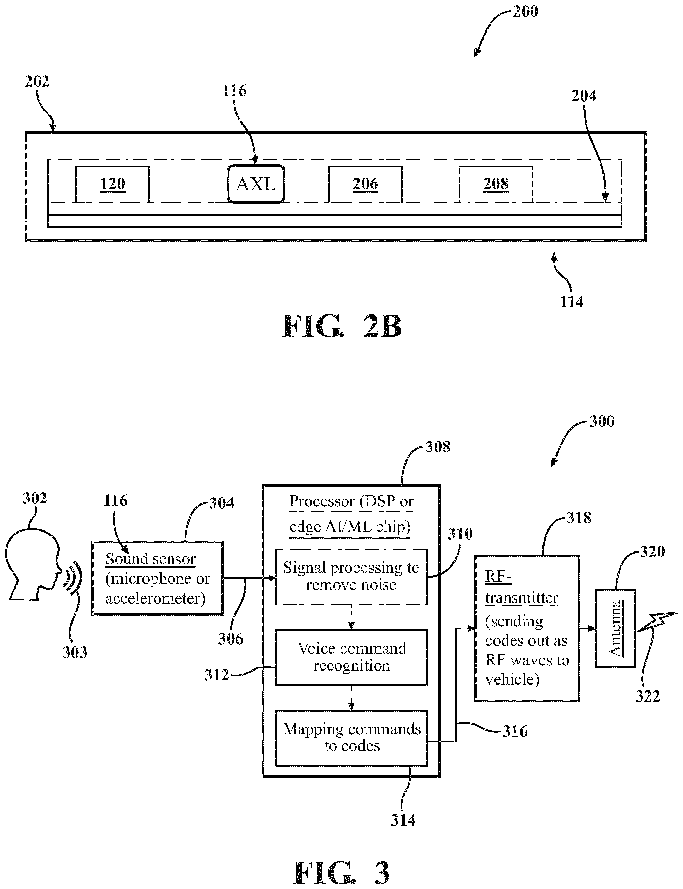

For one or more embodiments, the sound sensing element 116 may be a vibration sensing unit such as a MEMS accelerometer or a piezoelectric diaphragm, that senses sound-induced vibration of the surface that the smart sound sensor module 114 is attached. In this embodiment, the housing 202 does not have a sound port. This configuration is shown in FIG. 2B. The one or more embodiments shown in FIG. 2B is advantageous in that the housing 202 may be entirely sealed, protecting the smart sound sensor module 114 from dirt, water, weather elements, etc., that it may be exposed to when installed on a vehicle such as an automotive vehicle.

For one or more embodiments in which the smart sound sensor module 114 is included on the key fob 108. The printed circuit board 204 may be one and the same with a printed circuit board that is on the key fob 108. The key fob 108 becomes a voice activated key fob controller and all the electronics including the sound sensing element 116 and the voice/sound processor 120 are powered by a battery that is used in the key fob 108. An advantage of this embodiment is that it is a standalone solution for voice activated remote control that is independent to the vehicle.

FIG. 3 is a signal flow diagram 300 of one or more embodiments of the smart sound sensor module. A user 302, external to the vehicle, initiates a voice command 303 for a desired action. The voice command 303 is detected by the sound sensing device 116 on the smart sound sensor module as a sound signal 306. The smart sound sensor module 304 feeds the sound signal 306 to a voice recognition processor 308 of the smart sound sensor module where it is processed 310 to remove noise, performs voice recognition 312 to identify the voice command, and correlates 314 the voice command with a code 316 representative of the desired action. As discussed earlier herein, the code 316 may be an analog signal, digital handshake signal, or other coded signal, hereinafter referred to generally as a code 316. The processor 308 communicates the code 316 to an RF transmitter 318. The RF transmitter 318 transmits the code 316, wirelessly 322, via antenna 320 to the RF module (not shown) on the vehicle (not shown). It should be noted that while the sound event described in FIG. 3 is a voice command, other sound events may be recognizable by the smart sound sensor module. Specific examples of other sound events will be described later herein.

Because the smart sound sensor module 304 may have a dedicated voice recognition processor 308, the processor 308 may be low-power consuming and require much less processing power than, for example, a processor required by a vehicle ECU in the head unit of infotainment system of a vehicle. The processor 308 may be limited to only voice processing and key word, or specific sound event, recognition. The processor 308 may be, but is not limited to, a specialty voice processing DSP that focuses on voice command recognition. A full-scale speech engine is not needed. The processor 308 may also be, but is not limited to, smart MEMS microphone elements that packages an audio CODEC/DSP together with a MEMS sound sensing element in the same package. The processor 308 may also be, but is not limited to, an edge AI/ML processor/chip specialized in sound and voice processing. The edge AL/ML processor/chip solution is suitable for this application due to its potential for ultra-low power consumption and high accuracy in voice and sound event recognition.

The processor 308 processes 310 the sound signal 306, recognizes 312 the sound signal 306 as a voice command 303, and correlates 314 the voice command 303 with the code 316 representative of the desired action. Correlating 314 the voice command 303 with the code 316 may include, for example, mapping the voice command 303 to a look up table of known voice commands and codes.

An advantage of the low power consumption associated with the smart sound sensor module 114 of the inventive subject matter is that it may operate under an "always listening" mode to monitor speech and other acoustic events happening around the vehicle. To prevent unwanted, or accidental, activation of a desired action, particularly for security reasons, the desired action may only be initiated by the vehicle control module when an authorized user is nearby.

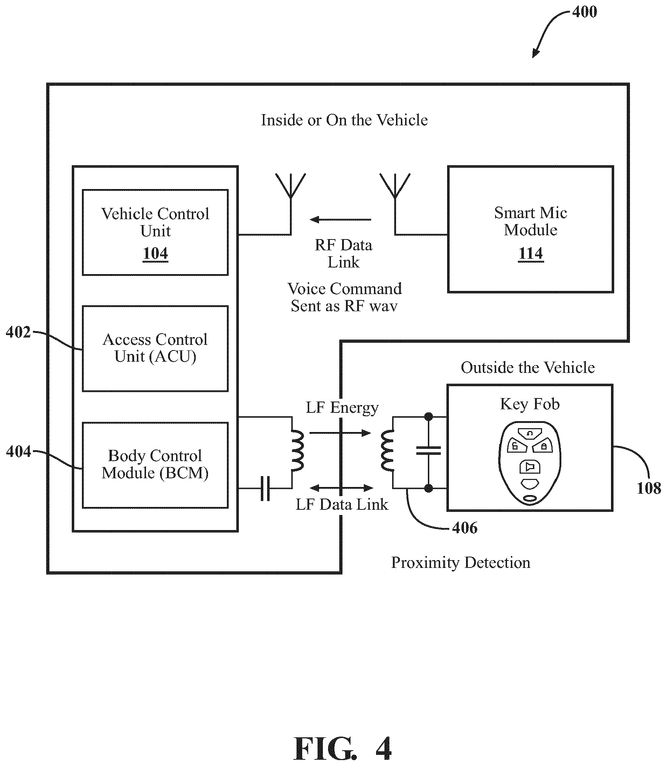

FIG. 4 is a block diagram 400 of one or more embodiments for limiting the activation of remote-control vehicle system functions using voice command to those commands that come from an authorized user. The smart sound sensor module 114 detects a voice command and that command is communicated to the vehicle control module 104. However, the voice command may have come from someone other than an authorized user. When the authorized user is not the one who initiated the voice command, the desired action should not be carried out by the vehicle control module. The vehicle control module 104 may have an access control unit 402 which controls locks to access the vehicle and/or a body control unit 404 which controls windows, trunk, etc. operation. The vehicle control module 104 will not activate any desired action received from the smart sound sensor module 114 unless a dedicated key fob 108 is detected within a predetermined proximity of the vehicle. Any authorized user must have the dedicated key fob with them in a close proximity to the vehicle. A proximity detection circuit 406 between the vehicle and the key fob 108 will prevent the vehicle control module 104 from reacting to a voice command that would otherwise initiate an action unless the authorized user has the key fob within the predetermined proximity to the vehicle.

FIG. 4 shows the smart sound sensor module 114 as being installed inside, or on, the vehicle. Because the smart sound sensor module 114 communicates with the vehicle control module 104 wirelessly through the RF link, it may alternatively be included on the key fob 108 forming a voice-activated key fob that is located outside of the vehicle.

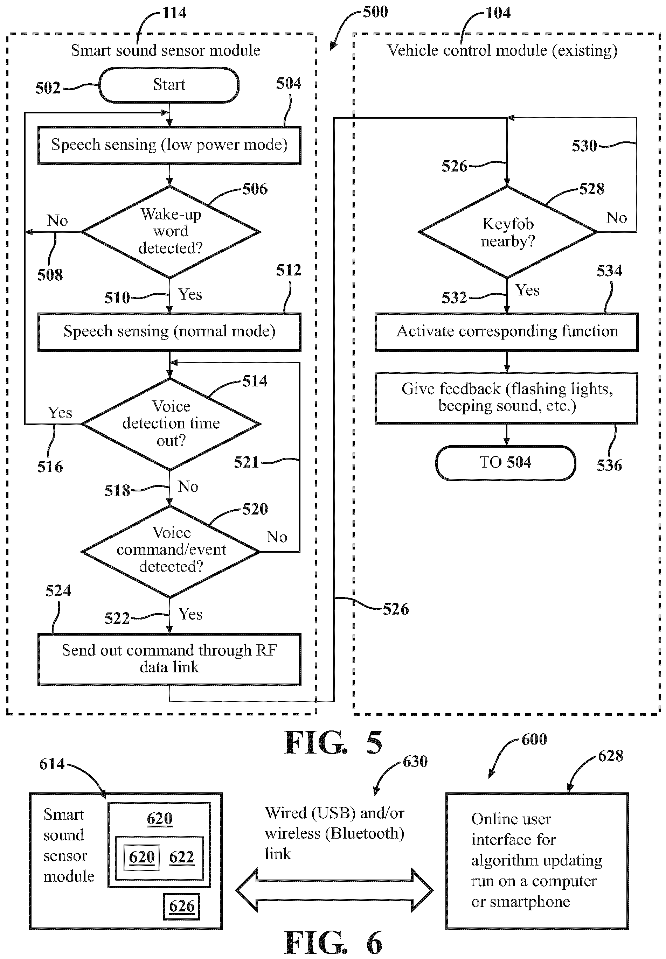

FIG. 5 is a flow diagram of one or more embodiments of a method 500 for using voice command to activate remote-control vehicle functions. The method is carried out by a processor executing instructions stored in non-transitory memory. The method 500 begins 502 at the smart sound sensor module 114. The smart sound sensor module 114 is operating in a low power mode 504 where it senses speech and waits 506 for a wake-word, or a sound event. A wake-word is a word or phrase that is spoken to make the smart sound sensor module ready to work. Additionally, or alternatively, a sound event may be recognized that also makes the smart sound sensor module ready to work. In the absence 508 of a wake-word or sound event, the smart sound sensor module will just continue to operate in its low power mode 504. Upon detecting 510 a wake-word or sound event, the smart sound sensor module will begin operating in a normal mode 512 where it is sensing speech and waiting for a voice command that is correlated with a desired action. Normal mode operation 512 will initiate a voice detection time out 514. Voice detection time out 514 will continue for a predetermined time limit 516, at which point the smart sound sensor module returns to its low power sensing mode 504. If voice detection time out does not occur 518, the method continues to step 520 where the sound sensor module listens 520 for a voice command or sound event. When a voice command or sound event is not detected 521, and the timer has not timed out, the voice detection timeout 514 continues. When a voice command, or sound event, is detected 522, an attempt is made to correlate 524 the voice command with a code, such as an analog, or digital handshake signal, or other coded signal. When an occurrence of a voice command or sound event cannot be correlated 520 with a code, the voice detection time out 512 will reset. When an occurrence of a voice command, or sound event, can be correlated to a code and the smart sound sensor module transmits 524 the code, through the RF link, to the vehicle control module 104.

The vehicle control module 104 receives 526 the code and performs a check 528 to determine if the key fob is within the predetermined proximity to the vehicle. If the key fob is not detected 530 within the predetermined proximity, the vehicle control module continues to check 528 to determine if the key fob is within the predetermined proximity to the vehicle.

When the key fob is detected 532 to be within the predetermined proximity to the vehicle, the vehicle control module activates 534 the function that corresponds to the code. Optionally, the vehicle control module may activate a notification 536, for example, cause lights to flash or cause the vehicle to emit a sound that indicates to an authorized user that the voice command was received and the desired action was carried out. At which point, the smart sound sensor module returns 534 to the low power speech sensing mode 504.

Many of the method steps that take place after transmitting 524 the code from the smart sound sensor module, through the RF link, to the vehicle control module are similar to existing vehicle remote-control systems (e.g., the passive entry system) that has a key fob and one or more vehicle control modules that unlock a door, open or close the trunk, open or close windows, start the ignition, etc. The smart sound sensor module and method of the inventive subject matter operates as a device, standalone from the vehicle, that captures the voice command, or sound event, processes, recognizes, and correlates the voice command, or sound event, with codes representative of the desired actions, then communicates the codes 526 to the vehicle control module. Sending out commands 524 represented by codes 526 to the vehicle control module through the RF link would otherwise be done by a user pressing one or more keys at the key fob. An advantage of the standalone smart sound sensor module is that it provides a convenient solution for voice-activated, or sound-activated, remote control that is easily implemented with an existing remote-control system. The inventive subject matter provides a voice control feature for automotive functions that would typically require extensive and costly modifications to the vehicle and its infotainment system, e.g., those requiring voice and sound event recognition being processed on the cloud or a general-purpose ECU in the vehicle. The inventive subject matter provides a solution that would otherwise not be practical to implement as a standalone smart sound sensor or an aftermarket option that can be readily integrated into a vehicle to realize voice command and sound event activated applications.

In one or more embodiments, the smart sound sensor module, while running in its low power sensing mode 504 is sensing a wake-word. This feature may be expanded to include sensing sound events in addition to the wake-word or voice commands. For example, the processor on the module may be programmed to detect and identify sound events that may be correlated to a breach of security of the vehicle. For example, the module may be programmed to identify a sound of breaking glass, knocking, or impact noise on the vehicle body or glass, to name a few examples.

When the sound event is detected, the vehicle control module may receive a signal, much like the code that correlates to the desired action voiced by a user, that causes the vehicle control module to initiate a vehicle system to react to the identification of the sound event as an anti-theft feature. For example, set off an alarm, cause lights on the vehicle to flash, etc.

In one or more embodiments, an algorithm for sound event recognition uses a lookup table, stored in memory. The lookup table is a set of voice commands, or sound events, (hereinafter, set),voice commands and sound events recognized by the processor on the smart sound sensor module and the codes that correspond with the recognized voice command and/or sound event. The sound event, upon being detected and recognized, is matched to the code, which is then communicated to the vehicle control module to carry out the desired action. The sound event set may be updated on demand, on a predetermined basis, through wired, or wireless, communication. Additionally, or alternatively, the update to the sound event set may be generated and executed in real time.

FIG. 6 is a block diagram of one or more embodiments of a system 600 for upgrading an algorithm, for voice command and/or sound event recognition, (hereinafter, the algorithm), by updating a voice command and/or sound event set 624, (hereinafter, the set), in real time. Voice command words, or sound events, that are recognizable by a processor 620 on the smart sound sensor module 614 may be added to the set 624, in real time, by upgrading the algorithm through an online user interface 628, hereinafter user interface. The processor 620 on the smart sensor module 614 has a memory 622 to store the set 624. The user interface 628 could be a cloud, or smartphone application that is run on a computer or smartphone. To enable the real-time algorithm updating function, the smart sound sensor module 614 includes a communication module 626, such as USB or Bluetooth, to communicate over a wired USB or Bluetooth link 630. The communication module 626 within the smart sound sensor module 614 may be integrated on the same PCB (not shown) as the other components of the smart sound sensor module 614, including the sound sensing element (not shown), the RF transmitter (not shown), and the antenna (not shown).

In one or more embodiments of the system described in FIG. 6, the algorithm may be predetermined, developed offline, by a smart sound sensor manufacturer or a third-party algorithm supplier, and downloaded to the smart sound sensor module 614 by way of the user interface 628 and the link 630. The predetermined algorithm may be loaded, by way of the user interface 628, directly to the smart sound sensor module 614 through the link 630.

Additionally, or alternatively, the sound recognition algorithm may use voice, or sound, samples that are specific to a user, or are specific to the vehicle, associated with the smart sound sensor module 614. In such an arrangement, sound and voice samples may be collected, in real time, using the smart sound sensor module 614. The samples may be communicated to the user interface 628, over the link 630, to generate an algorithm customized for the user and/or the vehicle.

In one or more embodiments of the system described in FIG. 6, sample collection that collects voice samples in real time to train the algorithm improves the security of the system by including biometric voice recognition. The algorithm learns a voice "fingerprint" that associates the system with one or more authorized users. In this arrangement, once the smart sound sensor module establishes a communication link 630, voice command samples uttered by one or more authorized users may be collected by the smart sound sensor module 614 and communicated to the user interface 628 where the collected samples are used for generating and/or training a biometric voice recognition algorithm. Once the biometric voice recognition algorithm is generated, it may be downloaded to the processor 620 of the smart sound sensor module 614.

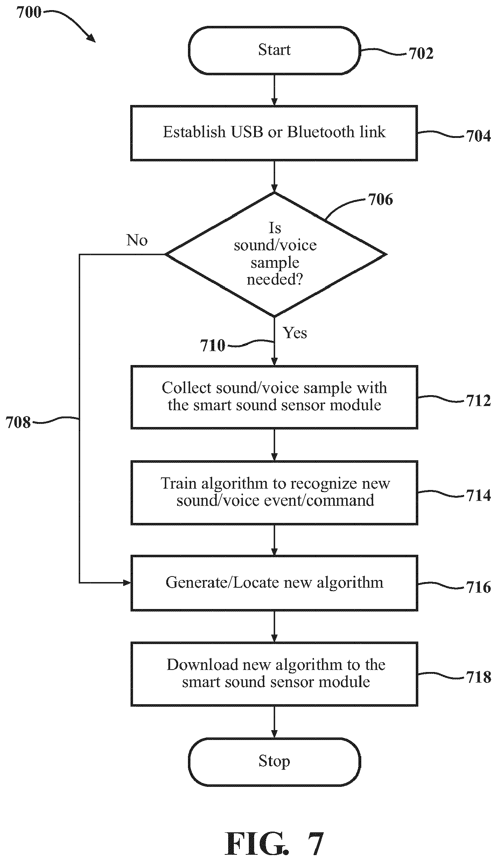

FIG. 7 is a flow chart of a method 700 for generating and/or training a voice command/sound event algorithm for the smart sound sensor module. The method is carried out by a processor executing instructions stored in non-transitory memory. The method 700 is initiated 702 by a user at the smart sound sensor module and/or using the online user interface. The smart sound sensor module establishes 704 a connection with the online user interface over the communication link. Step 706 of the method determines whether the smart sound sensor module needs sound and/or voice samples. When no samples are needed 708, the method proceeds to step 716 where the algorithm to be downloaded to the smart sound sensor module is located. When samples are needed 710, the method proceeds to step 712 where voice samples and sound sample are collected at the sound sensing element of the smart sound sensor module. The collected samples are communicated to the user interface where they are used to train 714 the algorithm to recognize commands associated with the voice commands and sound events. The method proceeds to step 716 where the algorithm is either generated or an existing algorithm is updated. The method proceeds to step 718 where the new, or updated, algorithm is downloaded, over the communication link, to the smart sound sensor module.

The inventive subject matter describes a convenient solution that is easily implemented to existing remote control systems for vehicle functions thereby providing a voice control feature for automotive functions that would otherwise require extensive and costly modifications to the vehicle, its infotainment system, and would otherwise not be practical to implement as a standalone smart sound sensor or an aftermarket option on a vehicle.

In the foregoing specification, the present disclosure has been described with reference to specific exemplary embodiments. The specification and figures are illustrative, rather than restrictive, and modifications are intended to be included within the scope of the present disclosure. Accordingly, the scope of the present disclosure should be determined by the claims and their legal equivalents rather than by merely the examples described.

For example, the steps recited in any method or process claims may be executed in any order, may be executed repeatedly, and are not limited to the specific order presented in the claims. Additionally, the components and/or elements recited in any apparatus claims may be assembled or otherwise operationally configured in a variety of permutations and are accordingly not limited to the specific configuration recited in the claims. Any method or process described may be carried out by executing instructions with one or more devices, such as a processor or controller, memory (including non-transitory), sensors, network interfaces, antennas, switches, actuators to name just a few examples.

Benefits, other advantages, and solutions to problems have been described above regarding particular embodiments; however, any benefit, advantage, solution to problem or any element that may cause any particular benefit, advantage or solution to occur or to become more pronounced are not to be construed as critical, required or essential features or components of any or all the claims.

The terms "comprise", "comprises", "comprising", "having", "including", "includes" or any variation thereof, are intended to reference a non-exclusive inclusion, such that a process, method, article, composition, or apparatus that comprises a list of elements does not include only those elements recited but may also include other elements not expressly listed or inherent to such process, method, article, composition or apparatus. Other combinations and/or modifications of the above-described structures, arrangements, applications, proportions, elements, materials, or components used in the practice of the present disclosure, in addition to those not specifically recited, may be varied, or otherwise particularly adapted to specific environments, manufacturing specifications, design parameters or other operating requirements without departing from the general principles of the same.

## Claims

1. A system for sound-activated remote control of vehicle functions for a vehicle having a remote-control system, the remote-control system has a key fob and at least one vehicle control module, the system for voice-activated remote control of vehicle functions comprising:
a smart sound sensor module having a sound sensing element and a processor for detecting and processing a set of sound events;
a sound event in a set of sound events, each sound event in the set of sound events is correlated with a code recognized by the at least one vehicle control module; and
an RF transmitter on the smart sound sensor module for transmitting the code from the smart sound sensor module to the remote-control system, wherein the at least one vehicle control module activates a function on the vehicle that is associated with the code.

2. The system of claim 1, wherein the smart sound sensor module further comprises a housing with a sound port and a sound sensing element for receiving the sound event to be correlated with the code.

3. The system of claim 2, wherein the smart sound sensor module is integrated into the key fob and the RF transmitter transmits the code to the remote-control system when the key fob is detected within a predetermined proximity of the vehicle.

4. The system of claim 1, wherein at least one of:
the set of sound events further comprises at least one sound event initiated by a user of the key fob, and
at least one sound event is initiated by an event external to the vehicle, not initiated by a user, and is selected from the group consisting of: breaking glass, knocking, and impact noise.

5. The system of claim 2, wherein the smart sound sensor module is installed on the vehicle.

6. The system of claim 2, wherein the sound sensing element senses sound-induced vibration.

7. The system of claim 1, wherein at least one of:
the smart sound sensor module further comprises a processor capable of performing voice recognition, and
the set of sound events is updatable.

8. A method for sound-activated remote control of vehicle functions for a vehicle having a remote-control system, the remote-control system has a key fob and at least one vehicle control module, the method for voice-activated remote control of vehicle functions comprises the steps of:
detecting, at a sound sensor on a smart sound sensor module, a sound event;
correlating, at a processor on the smart sound sensor module, the sound event with a code recognized by the at least one vehicle control module; and
transmitting, from an RF transmitter on the smart sound sensor module, the code to the remote-control system, wherein the at least one vehicle control module activates a function on the vehicle that is associated with the code.

9. The method as claimed in claim 8, wherein the step of detecting the sound event further comprises at least one of:
the steps of removing noise and performing voice recognition, and
detecting sound-induced vibration.

10. The method as claimed in claim 9, wherein the step of detecting the sound event further comprises detecting sound-induced vibration, and wherein detecting sound induced vibration further comprises detecting a voice command, a key word, breaking glass, knocking, and impact noise.

11. The method as claimed in claim 8, wherein the step of transmitting the code further comprises the step of confirming the sound event originated from an authorized user.

12. The method as claimed in claim 11, wherein the step of confirming the sound event originated from the authorized user further comprises at least one of:
the step of performing voice recognition, and
detecting the key fob to be within a predetermined proximity of the vehicle.

13. A method for sound-activated remote control of vehicle functions for a vehicle having a remote-control system, the remote-control system has a key fob and at least one vehicle control module, the method for voice-activated remote control of vehicle functions comprises the steps of:
operating a stand-alone smart sound sensor module in low power mode to sense speech until a wake word is detected;
upon detecting the wake word, entering a normal mode for sensing a voice command indicative of a desired action;
detecting the voice command indicative of the desired action;
correlating the voice command with a code;
transmitting the code from the stand-alone smart sound sensor module to the vehicle control module;
confirming the key fob is within a predetermined proximity of the vehicle; and
initiating the vehicle control module to carry out the desired action.

14. The method of claim 13, further comprising the steps of:
collecting, in real time at the stand-alone smart sound sensor module, sound event samples;
training an algorithm for the stand-alone smart sound sensor module; and
customizing the stand-alone smart sound sensor module.

15. The method of claim 14, wherein the step of collecting sound event samples further comprises the step of initiating a connection to an online user interface, the sound sample events are used in training the algorithm, and the algorithm is updated, over the connection, at the stand-alone smart sound sensor module.
